Europäisches Patentamt

European Patent Office    (11) Numéro de publication:    **0 077 360**

Office européen des brevets    **B1**

(12)    **FASCICULE DE BREVET EUROPEEN**

(45) Date de publication du fascicule du brevet: **18.12.85**    (51) Int. Cl.⁴: **H 02 H 9/00, H 04 M 1/31**

(21) Numéro de dépôt: **82901310.1**

(22) Date de dépôt: **16.04.82**

(86) Numéro de dépôt international:
**PCT/NL82/00011**

(87) Numéro de publication internationale:
**WO 82/03733 28.10.82 Gazette 82/26**

(54) **POSTE TELEPHONIQUE D'ABONNE MUNI DE DISPOSITIFS DE PROTECTION CONTRE LES SURTENSIONS.**

(30) Priorité: **16.04.81 FR 8107673**

(43) Date de publication de la demande:
**27.04.83 Bulletin 83/17**

(45) Mention de la délivrance du brevet:
**18.12.85 Bulletin 85/51**

(84) Etats contractants désignés:
**BE CH DE FR GB LI SE**

(56) Documents cités:
**WO-A-82/00372**
**DE-A-2 158 564**
**DE-A-2 614 019**
**DE-A-2 742 623**
**US-A-3 558 830**

(73) Titulaire: **R.T.C. LA RADIOTECHNIQUE-COMPELEC Société anonyme dite:**
**51 rue Carnot**
**F-92150 Suresnes(Hauts-de-Seine) (FR)**
㊴ **FR**

(73) Titulaire: **N.V. Philips' Gloeilampenfabrieken**
**Groenewoudseweg 1**
**NL-5621 BA Eindhoven (NL)**
㊴ **BE CH DE GB LI SE**

(72) Inventeur: **COULMANCE, Jean-Pierre**
**108, rue de Livilliers**
**F-95520 Osny (FR)**

(74) Mandataire: **Pinchon, Pierre et al**
**Société Civile S.P.I.D. 209 rue de L'Université**
**F-75007 Paris (FR)**

Courier Press, Leamington Spa, England.

## Description

La présente invention concerne un poste téléphonique d'abonné muni, d'une part, d'un premier dispositif de protection contre les surtensions, connecté dans ledit poste, aux entrées de ligne, et d'autre part, d'un second dispositif de protection, disposé en aval du crochet du combiné, destiné à limiter la puissance appliquée à un circuit électronique de transmission et de numérotation qui coopère avec un interrupteur de numérotation et un clavier à touches.

Si l'introduction des circuits électroniques dans les équipements de télécommunication est la source de nombreux progrès, elle a rendu plus ardue la solution de certains problèms de sécurité parmi lesquels on peut citer la protection contre les surtensions.

En effet, la structure même des équipements électromécaniques classiques leur permet de résister à des surtensions de plusieurs dizaines, voire plusieurs centaines de volts, ce qui autorise la mise en oeuvre de moyens de protection rustiques et efficaces tels que des éclateurs. Il n'en est pas de même pour les équipements munis de circuits électroniques qui ne supportent pas les surtensions auparavant admises.

Cette situation a conduit à employer des moyens de protection, soit actifs constitués par des circuits électroniques, soit passifs constitués par des composants à caractéristiques non linéaires.

Dans la demande de brevet DE—A—2 742 623, sont décrits des moyens, de type actif, pour limiter les surintensités appliquées à un circuit électronique de numérotation coopérant avec un clavier à touches d'un poste téléphonique d'abonné. Le même document indique aussi comment le dispositif de limitation d'intensité peut être combiné avec l'interrupteur de numérotation.

En amont du dispositif limiteur d'intensité est également prévu, selon le document cité, un limiteur de surtension branché en parallèle sur les extrémités des fils de lignes qui, fonctionnant à la manière d'une diode Zener, est chargé de s'opposer à une élévation de la tension de ligne au dessus d'un seuil choisi, par absorption de courant sur la ligne.

Un tel circuit électronique de protection, est impropre à protéger complètement un poste téléphonique d'abonné car il ne peut résister à des surtensions importantes telles que celles qui peuvent résulter, par exemple, du contact accidentel d'une ligne téléphonique avec un câble de distribution d'électricité.

Les moyens passifs tels que les résistances à coefficient de tension (VDR) et les résistances à coefficient de température positif (CTP) permettent une protection peu coûteuse et efficace. Il suffit, en effet, de disposer à l'entrée du poste d'abonné deux résistances CTP en série dans chacun des conducteurs de ligne et une VDR en parallèle en aval de celles-ci. En présence d'une surtension de ligne, la résistance de la VDR chûte fortement, ce qui fait circuler un courant important dans les CTP dont l'échauffement augmente considérablement l'impédance de ligne.

Toutefois, la protection ainsi obtenue n'est pas complète dans le cas où le poste d'abonné est muni de circuits électroniques; on sait, en effet, que la procédure d'appel d'un poste d'abonné à partir du central s'effectue en appliquant à la ligne une tension alternative à 50 Hz de l'ordre de 70 à 80 volts. Après décrochage du combiné, la tension continue de ligne s'établit à environ 10 volts, tension à partir de laquelle sont alimentés les divers circuits électroniques du poste d'abonné.

Si l'on désire conserver un fonctionnement normal au circuit de sonnerie, il faut que la tension de "coude" de la VDR ne soit pas inférieure à une certaine de volts, ce qui signifie qu'une surtension inférieure à cette valeur peut être appliquée, en position "décroché" du combiné, aux circuits électroniques du poste d'abonné sans que les moyens de protection réagissent.

Si les circuits électroniques sont munis de moyens internes de limitation et de stabilisation de tension d'alimentation, il n'en reste pas moins vrai qu'une surtension prolongée peut entraîner la destruction d'un ou plusieurs circuits par surintensité.

Pour satisfaire aux exigences les plus sévères, on en vient à utiliser, comme indiqué dans la demande de brevet français FR—A—2132175, deux dispositifs de protection, l'un limitant la tension aux entrées de ligne du poste téléphonique, l'autre disposé en aval du crochet du combiné, pour abaisser encore la puissance admise aux circuits électroniques chargés de traiter les signaux de transmission et de numérotation.

Il reste que l'appareil, tel que décrit dans ce document, peut encore être endommagé lorsqu'on applique à ses bornes une surtension prolongée.

Un des buts de l'invention est de protéger un poste d'abonné contre toutes les possibilités de dérangement ou de destruction résultant d'une surtension de n'importe quelle valeur.

Un autre but de l'invention est de mettre à profit une des formes de réalisation du dispositif de protection pour effectuer la procédure de numérotation par coupures périodiques du courant de ligne.

Selon l'invention, un poste téléphonique d'abonné muni, d'une part, d'un premier dispositif de protection contre les surtensions, connecté dans ledit poste, aux entrées de ligne, et d'autre part, d'un second dispositif de protection, disposé en aval du crochet du combiné, destiné à limiter la puissance appliquée à un circuit électronique de transmission et de numérotation, qui coopère avec un interrupteur de numérotation et un clavier à touches, est notamment, remarquable en ce que ledit second dispositif de protection est constitué par un circuit électronique dipôle connecté en série à une des entrées dudit circuit de transmission et de numérotation, ce circuit dipôle comportant un premier transistor dont le trajet émetteur-collecteur est raccordé à l'une des bornes du dipôle, dite borne de sortie, par une résistance de mesure de courant, et à l'autre borne du dipôle, dite borne d'entrée, par une diode formant avec un second transistor, de polarité inverse à celle du premier transistor, un miroir de courant qui alimente, par le collecteur de ce second transistor, la base du premier transistor, laquelle est également raccordée à la borne d'entrée via au moins une résistance de polarisation, tandis qu'un troisième transistor a son trajet émetteur-collecteur connecté en shunt entre ladite borne de sortie et la base du premier transistor, et a sa base reliée à l'émetteur du premier transistor, de sorte que ce troisième transistor devienne conducteur lorsque le courant traversant la résistance de mesure de courant atteint une valeur prédéterminée.

Selon un mode de mise en oeuvre avantageux, le circuit électronique dipôle comporte un quatrième transistor de même polarité que celle du premier transistor, dont le trajet émetteur-collecteur est connecté en shunt entre la borne de sortie et la base du premier transistor pour bloquer ce dernier lorsque la tension aux bornes de circuit dipôle dépasse un seuil de tension prédéterminé qui est définir à partir d'une diode Zener dont une électrode est reliée à la base du quatrième transistor et l'autre électrode est reliée au point commun de deux résistances dont le montage en série constitue ladite résistance de polarisation de base du premier transistor.

Avantageusement, le circuit électronique dipôle limiteur de puissance comporte une borne auxiliaire d'interruption de courant reliée au circuit de transmission et de numérotation. Aussi le circuit électronique dipôle peut-il constituer également l'interrupteur de numérotation, la borne de commande de l'interruption de ligne étant reliée à la base du premier transistor par l'intermédiaire d'une diode formant miroir de courant avec le trajet émetteur base d'un cinquième transistor, de polarité inverse de celle du premier transistor et dont le trajet émetteur-collecteur est connecté en shunt entre la borne de sortie et la base du premier transistor.

Grâce à son temps de réponse très bref et à ses caractéristiques particulières, le second dispositif de protection assure, en association avec le premier dispositif, une sécurité complète contre les surtensions longues ou brèves, que le combiné soit ou non décroché. De plus, la structure de ce second dispositif de protection est simple même dans le cas où il remplit également la fonction de numérotation par interruption périodique du courant de ligne. On peut donc envisager l'intégration de ce circuit, soit sous forme séparée, soit encore sous une forme incorporée au circuit intégré de transmission/numérotation.

La description qui va suivre, en regard des dessins annexées, fera bein comprendre comment l'invention peut être réalisée.

La figure 1 représente le schéma d'un poste d'abonné muni de deux dispositifs de protection.

La figure 2 représente une variante de réalisation du poste de la figure 1 incorporant au second dispositif de protection le système de numérotation par interruptions périodiques du courant de ligne.

La figure 3 représente le schéma de principe d'un dispositif limiteur de courant équipant le poste d'abonné de la figure 1.

La figure 4 représente la caractéristique courant/tension du montage de la figure 3.

La figure 5 représente le schéma de principe d'un dispositif combiné limiteur de courant/interrupteur équipant le poste d'abonné de la figure 2.

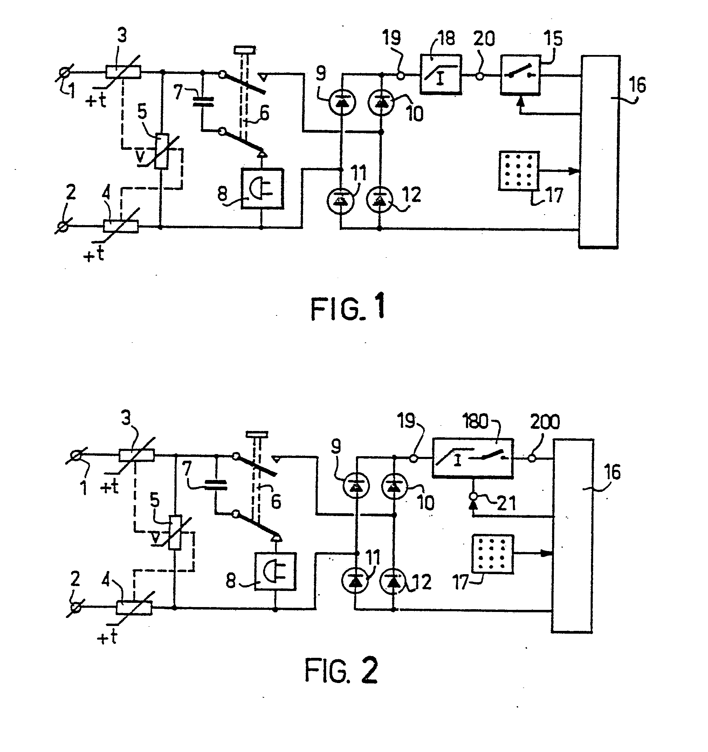

Sur la figure 1, deux bornes 1 et 2 de branchement à la ligne téléphonique sont connectées par deux résistances 3 et 4 à coefficient de température positif (CTP) à une résistance 5 à coefficient de tension (VDR), ces trois résistances étant couplées thermiquement. Les plots communs d'un double interrupteur de combiné 6 (crochet) sont reliés au point commun des résistances 3 et 5, l'un directement et l'autre par l'intermédiaire d'un condensateur de sonnerie 7 coopérant avec un circuit de sonnerie 8 disposé entre le plot de travail en question du crochet 6 et le point commun aux résistances 4 et 5. Les deux entrées d'un pont de diodes 9, 10, 11, 12 sont connectées, l'une, à l'autre plot de travail du crochet 6 et l'autre, au point commun des résistances 4 et 5.

Entre les bornes de sortie du pont 9, 10, 11, 12, est disposé un circuit 16 de transmission et de numérotation, dont une entrée comporte, en série, un circuit électronique dipôle 18 ayant le rôle de second dispositif de protection, limiteur de puissance, ainsi qu'un interrupteur de numérotation 15. Le circuit 16 est, par ailleurs, muni d'une entrée de numérotation reliée à un clavier à touches 17, et d'une sortie de commande d'interruptions périodiques reliée à l'interrupteur 15.

Abstraction faite du circuit dipôle 18, dont la structure et la fonction seront décrites ultérieurement, le fonctionnement du poste d'abonné de la figure 1 est le suivant: à l'état de repos, le crochet 6 est dans la position figurée sur le schéma, ce qui permet à un signal alternatif de sonnerie appliqué aux bornes 1 et 2 d'actionner il circuit 8 via le condensateur 7; lorsque l'abonné décroche, le circuit de sonnerie est interrompu et la ligne est branchée sur le circuit 16 via le circuit dipôle 18 et l'interrupteur 15 en position "fermé"; la communication s'établit. En procédure d'appel, l'abonné, après avoir décroché, compose le numéro de son correspondant sur le clavier 17, ce qui, après traitement par le circuit 16, envoie des impulsions de commande à l'interrupteur 15 afin d'effectuer les coupures périodiques du courant de ligne qui seront décodées par le central.

En fonctionnement normal, la valeur de la résistance à froid des CTP 3 et 4 est suffisamment basse pour être considérée comme quasi négligeable devant l'impédance totale du poste d'abonné. La valeur du seuil de tension de la résistance VDR 5 est bien évidemment choisie supérieure à la tension alternative de crête d'actionnement de la sonnerie 8 qui est de l'ordre de 80 volts; dans ces conditions, si une surtension accidentelle se produit sur la ligne branchée aux bornes 1 et 2, la VDR 5 diminue fortement de valeur et un courant circule alors dans les CTP 3 et 4.

Si la surtension est de très courte durée, la VDR 5 et les CTP 3 et 4 n'ont pas le temps de s'échauffer et le fonctionnement normal est rétabli instantanément; par contre, si la surtension est permanente, deux cas peuvent se produire:

1. la surtension est de valeur suffisante pour provoquer dans les CTP 3 et 4 le passage d'un courant supérieur au seuil de basculement desdites CTP, en général plus de 100 milliampères; dans ces conditions, la résistance des CTP 3 et 4 croît fortement et la protection est effective,

2. la surtension est de valeur insuffisante pour provoquer le passage d'un courant supérieur au seuil de basculement des CTP, mais néanmoins suffisant pour entraîner à terme la destruction par échauffement de la VDR 5.

Cette seconde éventualité est palliée par la couplage thermique entre les CTP 3 et 4 et la VDR 5, l'échauffement de cette dernière étant rapidement communiqué aux CTP, ce qui provoque leur basculement.

En position de repos du crochet 6, le circuit de sonnerie 8 est ainsi parfaitement protégé contre toute surtension et toute surintensité.

Il n'en va pas de même en position "décroché" pour les circuits du poste d'abonné disposés en aval du crochet 6. En effet, la valeur de la surtension est limitée à environ 200 volts par la VDR 5 alors que la tension nominale d'alimentation du circuit 16 est de l'ordre d'une dizaine de volts; il en résulte qu'une surtension prolongée en position "décroché" risque d'entraîner la destruction du circuit 16 par surintensité au niveau des diodes Zener fixant les tensions internes de fonctionnement dudit circuit.

Selon l'invention, une telle éventualité est rendue impossible par la présence du second dispositif de protection représenté par le circuit électronique dipôle 18 qui limite l'intensité appliquée à l'une des entrées du circuit 16.

En l'absence de surtension, le circuit limiteur dipôle 18 se comporte comme une résistance pure de faible valeur vis-à-vis du courant consommé par le circuit 16 en fonctionnement normal; à partir d'une certaine valeur de courant liée à la présence d'une surtension, celui-ci ne croît plus tandis que la tension entre les bornes 19 et 20 continue de croître jusqu'à une certaine valeur où le courant devient brusquement quasi nul; à ce moment, le circuit 18 se comporte pratiquement comme un interrupteur à l'état ouvert dont la tension aux bornes 19 et 20 est, de toutes façons, limitée par la VDR amont 5. Dès la disparition de la surtension, le circuit 18 retrouve instantanément ses caractéristiques antérieures.

Sur la figure 2, dont les références sont communes avec celles de la figure 1, un circuit limiteur/interrupteur 180 est intercalé entre la borne 19 et une borne 200 d'entrée de ligne du circuit 16, ledit circuit 180 comportant une borne de commande 21 d'interruption.

Le circuit 180 combine les fonctions de l'interrupteur 15 et du circuit limiteur 18 de la figure 1; il se comporte en fonctionnement normal comme émetteur d'impulsions de numérotation fournies par le circuit 16 lors de l'actionnement du clavier 17 par l'abonné et, en présence d'une surtension, il assume la fonction de limitation de puissance de la façon décrite précédemment.

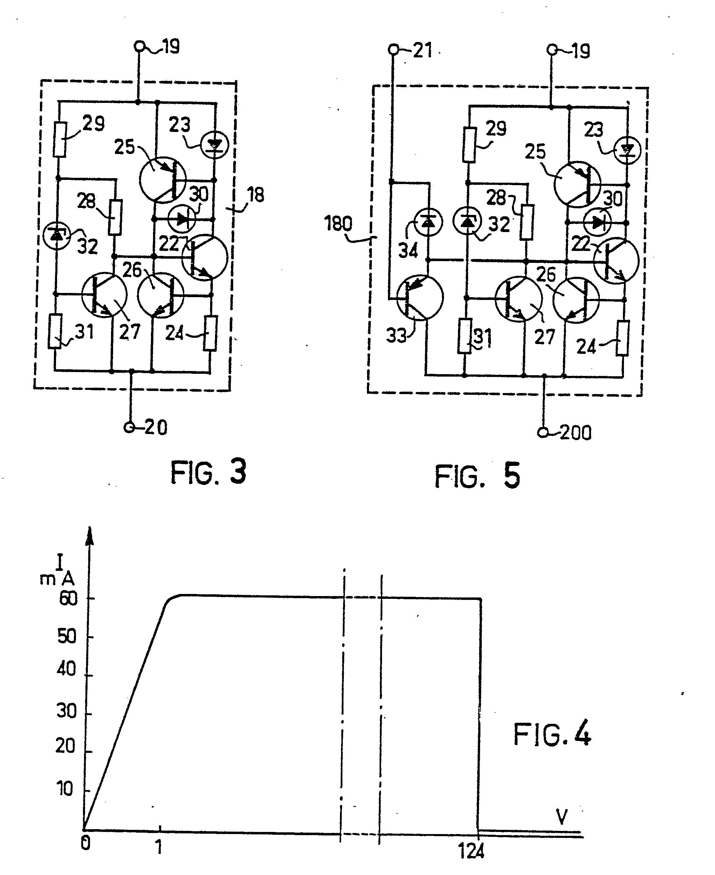

Sur la figure 3, dont les références sont communes avec celles de la figure 1, le circuit limiteur 18 comporte un premier transistor 22, de type NPN dont le collecteur est relié à la cathode d'une diode 23, l'anode de cette dernière étant connectée à la borne d'entrée 19; l'émetteur du transistor 22 est réuni à la borne de sortie 20 par une résistance 24.

Un deuxième et un troisième transistors 25 et 26, respectivement de types PNP et NPN, sont disposés en série entre les bornes 19 et 20, les émetteurs étant respectivement reliés à ces dernières. Les bases des transistors 25 et 26 sont respectivement reliées, la première au collecteur du transistor 22, et la seconde à l'émetteur du même transistor.

Un quatrième transistor 27, de type NPN, a son émetteur directement relié à la borne 20, tandis que son collecteur est réuni à la borne 19 par l'intermédiaire de deux résistances 28 et 29 en série.

Les collecteurs réunis des trois transistors 25, 26 et 27 sont reliés, d'une part à la base du transistor 22, et d'autre part à l'anode d'une diode 30 dont la cathode est reliée au collecteur du transistor 22. La base du transistor 27 est reliée, d'une part à la borne 20 par une résistance 31, et d'autre part à l'anode d'une diode Zener 32 dont la cathode est réunie au point commun des résistances 28 et 29.

Le circuit 19 selon l'invention fonctionne de la façon suivante: à la mise sous tension, la base du transistor 22 est alimentée à travers le résistances 28 et 29, et le courant de collecteur du transistor 22 circule dans la diode 23 du miroir de courant constitué par ladite diode et le transistor 25; le courant de collecteur du transistor 25 alimentant la base du transistor 22, l'ensemble se stabilise dans un état conducteur proche de la saturation complète.

La diode 30, dont la présence est facultative, dérive une partie du courant de base du transistor 22, ce qui permet de réduire éventuellement le temps de reblocage du circuit. Lorsque la chute de tension croît aux bornes de la résistance 24, le transistor 26 commence à débiter et le courant de collecteur du transistor 25 se divise alors entre la base du transistor 22 et le collecteur du transistor 26; le débit du transistor 22 se stabilise et la tension entre les bornes 19 et 20 augmente. Comme le courant collecteur du transistor 26 se trouve en rapport imposé par le miroir de courant 23, 25, avec le courant collecteur du transistor 22, c'est en définitive l'ensemble de ces courants qui se trouve stabilisé.

Lorsque la tension entre les bornes 19 et 20 dépasse la valeur du produit de la tension de Zener de la diode 32 par

$$\frac{R28 + R29}{R29},$$

le transistor 27 commence à débiter et arrive rapidement à saturation, bloquant ainsi le transistor 22. Cet état de blocage subsiste tant que la tension aux bornes de la diode 32 est suffisante pour qu'un courant circule dans la base du transistor 27.

La figure 4 illustre les trois phases de fonctionnement du circuit de la figure 1.

Pour une variation entre zéro et 1,6 volt de la tension entre les bornes 19 et 20 correspondant au fonctionnement normal du poste téléphonique, la variation de courant est linéaire, la pente de cette variation étant pratiquement déterminée par la valeur de la résistance 24.

A partir de 1,6 volt et jusqu'à une valeur de seuil que l'on peut choisir, par exemple 124 volts, le courant cesse de croître et est limité à environ 60 mA.

A 124 volts, le courant chute brusquement et reste limité à une valeur très faible déterminée principalement par la courant de saturation du transistor 27 limité par les résistances 28 et 29 en série. La protection est ainsi totale puisque le courant circulant entre les bornes 19 et 20 est pratiquement interrompu au moment où la puissance dissipée dans le circuit risquerait à la longue d'entraîner la destruction de celui-ci.

Sur la figure 5, dont les références sont communes avec celles des figures 1, 2 et 3, le circuit combiné limiteur/interrupteur 180 comporte les mêmes composants agencés de la même façon que le circuit 18 de la figure 3, auxquels a été adjoint un transistor de commande 33, de type PNP dont le collecteur est directement connecté à la borne de sortie 200 et dont l'émetteur est, par ailleurs, relié à la base du transistor 22 et aux collecteurs réunis des transistors 25, 26 et 27.

La base du transistor 33 est reliée, d'une part à la borne 21 de commande d'interruption, et d'autre part à la cathode d'une diode 34 dont l'anode est réunie à l'émetteur.

Lorsque la borne 21 est à un potentiel légèrement supérieur à celui de la borne de sortie 200, le transistor 33 est bloqué et le circuit limiteur fonctionne de la même façon que le circuit 18 de la figure 3. Si la borne de commande 21 est portée à une tension négative par rapport à la borne 200, le transistor 33 est porté à saturation, ce qui a pour effet de bloquer le transistor 22, et partant d'interrompre de courant circulant entre les bornes 19 et 200; il suffit donc d'appliquer à la borne 21 des impulsions de tension négative compatibles en durée, nombre et rythme avec les signaux normalisés de numérotation pour obtenir la communication avec un correspondant.

## Revendications

1. Poste téléphonique d'abonné muni, d'une part, d'un premier dispositif de protection contre les surtensions (3, 4, 5) connecté dans ledit poste, aux entrées de ligne (1, 2) et d'autre part, d'un second dispositif de protection (Fig. 1, 18; Fig. 2, 180), disposé en aval du crochet (16) du combiné, destiné à limiter la puissance appliquée à un circuit électronique de transmission et de numérotation (16) qui coopère avec un interrupteur de numérotation (Fig. 1, 15; Fig. 2, 180) et un clavier (17) à touches, caractérisé en ce que ledit second dispositif de protection est constitué par un circuit électronique dipôle (Fig. 3, 18; Fig. 5, 180) connecté en série à une des entrées dudit circuit de transmission et de numérotation (16), ce circuit dipôle comportant un premier transistor (22) dont la trajet émetteur-collecteur est raccordé à l'une des bornes du dipôle, dite borne de sortie (Fig. 3, 120; Fig. 5, 200), par une resistance de mesure de courant (24), et à l'autre borne du dipôle, dite borne d'entrée (19), par une diode (23), formant avec un second transistor (25), de polarité inverse à celle du premier transistor (22), un miroir de courant qui alimente, par le collecteur de ce second transistor, la base du premier transistor (22), laquelle est également raccordée à la borne d'entrée (19) via au moins une résistance de polarisation (28, 29), tandis qu'un troisième transistor (26) a son trajet émetteur-collecteur connecté en shunt entre ladite borne de sortie et la base du premier transistor (22), et a sa base reliée à l'émetteur du premier transistor, de sorte que ce troisième transistor (26) devienne conducteur lorsque le courant traversant la résistance de mesure de courant (24) atteint une valeur prédéterminée.

2. Poste téléphonique d'abonné selon la revendication 1, caractérisé en ce que le circuit électronique dipôle (Fig. 3, 18; Fig. 5, 180) comporte un quatrième transistor (27) de même polarité que celle du premier transistor (22), dont le trajet émetteur-collecteur est connecté en shunt entre la borne de sortie (Fig. 3, 20; Fig. 5, 200) et la base du premier transistor (22) pour bloquer ce dernier lorsque la tension aux bornes du circuit dipôle dépasse un seuil de tension prédéterminé qui est défini à partir d'une diode Zener (32) dont une électrode est reliée à la base du quatrième transistor (27) et l'autre électrode est reliée au point commun de deux résistances (28, 29) dont le montage en série constitue ladite résistance de polarisation de base du premier transistor (22).

3. Poste téléphonique d'abonné selon l'une des revendications 1 ou 2, caractérisé en ce que le circuit électronique dipôle (180) constitue également l'interrupteur de numérotation, une borne de commande (21) de l'interruption de ligne étant reliée à la base du premier transistor (22) par l'intermédiaire d'une diode (34) formant miroir de courant avec le trajet émetteur-base d'un cinquième transistor (33), de polarité inverse de celle du premier transistor (22) et dont le trajet émetteur-collecteur est connecté en shunt entre la borne de sortie (200) et la base du premier transistor (22) (Fig. 2 et 5).

## Patentansprüche

1. Teilnehmerfernsprechapparat mit einer ersten Überspannungsschutzeinrichtung (3, 4, 5), die in dem genannten Apparat mit dem Leistungseingängen (1, 2) verbunden ist, und mit einer zweiten Schutzeinrichtung (Fig. 1, 18; Fig. 2, 180), die dem Gabelkontakt (6) nachgeschaltet ist, mit der Bestimmung, die einer elektronischen Übertragungs- und Wahlschaltung (16), die mit einem Wahlunterbrecher (Fig. 1, 15; Fig. 2, 180) und mit einem Tastenfeld (17) zusammenarbeitet, zugeführte Leistung zu beschränken, dadurch gekennzeichnet, dass, die genannte zweite Schutzeinrichtung durch eine elektronische Zweipolschaltung (Fig. 3, 18; Fig. 5, 180) gebildet wird, die mit einem der Eingänge der genannten Übertragungs- und Wahlschaltung (16) in Reihe liegt, wobei diese Zweipolschaltung einen ersten Transistor (22) aufweist, dessen Emitter-Kollektorstrecke mit einem der Anschlüsse des Zweipols, der als Ausgangsanschluss bezeichnet wird (Fig. 3, 20; Fig. 5, 200) verbunden ist und zwar über einen Strommmesswiderstand (24), sowie mit dem anderen Anschluss des Zweipols, der als Eingangsanschluss (19) bezeichnet wird, über eine Diode (23), die mit einem zweiten Transistor (25) mit einem Zeitfähigkeitsverhalten, das gegenüber dem des ersten Transistors (22) entgegengesetzt ist, einen Stromspiegel bildet, der über den Kollektor des zweiten Transistors die Basis des ersten Transistors (22) speist, wobei die Basis des ersten Transistors (22) über mindestens einen Vorspannungswiderstand (28, 29) ebenfalls mit dem Eingangsanschluss (19) verbunden ist, während die Emitter-Kollektor-Strecke eines dritten Transistors (26) in Parallelschaltung zwischen dem genannten Ausgangsanschluss und der Basis des ersten Transistors (22) eingeschaltet ist und wobei die Basis mit dem Emitter des ersten Transistors verbunden ist, so dass dieser dritte Transistor (26) leitend wird, wenn der durch den Strommmesswiderstand (24) fliessende Strom einen vorbestimmten Wert erreicht.

2. Teilnehmerfernsprechapparat nach Anspruch 1, dadurch gekennzeichnet, dass die elektronische Zweipolschaltung (Fig. 3, 18; Fig. 5, 180) einen vierten Transistor (27) vom gleichen Zeitfähigkeitstyp wie der erste Transistor (22) aufweist, dessen Emitter-Kollektor-Strecke als Parallelschaltung zwischen dem Ausgangssanschluss (Fig. 3, 20; Fig. 5, 20) und der Basis des ersten Transistors (22) vorgesehen ist und zwar zum Sperren des letztgenannten Transistors, wenn die Spannung an den Klemmen der Zweipolschaltung eine vorbestimmte Spannungsschwelle überschreitet, die durch eine Zener-Diode (32) bestimmt wird, deren eine Elektrode mit der Basis des vierten Transistors (27) verbunden ist und deren andere Elektrode mit einem gemeinsamen Punkt zweier Widerstände (28, 29) verbunden ist, deren Reihenschaltung den genannten Vorspannungswiderstand an der Basis des ersten Transistors (22) bildet.

3. Teilnehmerfernsprechapparat nach einem der Ansprüche 1 oder 2, dadurch gekennzeichnet, dass die elektronische Zweipolschaltung (180) zugleich den Wahlunterbrecher bildet, wobei ein Steueranschluss (21) zur Leitungsunterbrechung mit der Basis des ersten Transistors (22) verbunden ist und zwar mittels einer Diode (34), die mit der Emitter-Basis-Strecke eines fünften Transistors (33), dessen Zeitfähigkeitsverhalten entgegengesetzt der des ersten Transistors (22) ist und dessen Emitter-Kollektor-Strecke als Parallelschaltung zwischen der Ausgangsklemme (200) und der Basis des ersten Transistors (22) liegt, einen Stromspiegel bildet (Fig. 2 und 5).

## Claims

1. A subscriber telephone set incorporating a first overvoltage protection means (3, 4, 5), connected in said set to the line inputs (1, 2) and also a second protection means (Fig. 1, 18; Fig. 2, 180), provided upstream of the hook contact (6), intended to limit the power applied to an electronic transmission and dialling circuit (16) associated with a dialling interrupter (Fig. 1, 15; Fig. 2, 180) and a push-button dial (17), characterized in that said second protection device is formed by a dipole electronic circuit (Fig. 3, 18; Fig. 5, 180) arranged in series with one of the inputs of said transmission and dialling circuit (16), this dipole circuit comprising a first transistor (22) whose emitter-collector path is connected to one of the terminals of said output dipole (Fig. 3, 20; Fig. 5, 200) via a current measuring resistor (24) and to the other terminal of the dipole, the input dipole (19), via a diode (23) which forms together with a second transistor (25) whose polarity is the reverse of the polarity of the first transistor (22), a current mirror supplying via the control electrode the base of the first transistor which is also connected to the input terminal (19) via at least one bias resistor (28, 29), whilst a third transistor (26) has its emitter-collector path arranged in parallel between said output terminal and the base of the first transistor (22), and its base connected to the emitter of the first transistor, so that this third transistor (26) becomes conductive when the current flowing through the current measuring resistor (24) reaches a predetermined value.

2. A subscriber telephone set as claimed in Claim 1, characterized in that the dipole electronic circuit (Fig. 3, 18; Fig. 5, 180) comprises a fourth transistor (27) of the same polarity as the first transistor (22), whose emitter-collector path is arranged in parallel with the output terminal (Fig. 3, 20; Fig. 5, 200) and the base of the first transistor (22) to cut of the latter when the voltage at the terminals of the dipole circuit exceeds a predetermined threshold voltage which is defined via a Zener diode (32) one electrode of which is connected to the base of the fourth transistor (27) and the other electrode is connected to the junction between the two resistors (28, 29) whose series arrangement constitutes said bias resistor of the base of the first transistor (22).

3. A subscriber telephone set as claimed in one of the Claims 1 or 2, characterized in that the dipole electronic circuit (180) also forms the dialling interrupter, a line interruption control terminal (21) being connected to the base of the first transistor (22) via a diode (34) which together with the emitter-base path of a fifth transistor (33), whose polarity is the reverse of the polarity of the first transistor (22) forms a current mirror and whose emitter-collector path is arranged in parallel between the output terminal (200) and the base of the first transistor (22) (Figs. 2 and 5).

FIG. 1

FIG. 2

FIG. 3

FIG. 5

FIG. 4

2